# EUROPEAN PATENT SPECIFICATION

(11) **EP 0 968 642 B1**
(45) Date of publication and mention of the grant of the patent: **07.03.2007**
(21) Application number: 99112757.2
(22) Date of filing: 01.07.1999
(51) Int. Cl.: A01F 25/14, A01F 25/08

(54) **Device for processing foodstuffs,particularly round bales of hay**
Vorrichtung um Futter zu behandeln insbesondere Rundballen aus Heu
Dispositif pour traiter du fourrage spécialement des balles rondes de foin

(30) Priority: 01.07.1998 IT MN980029; 06.10.1998 IT MN980037; 03.06.1999 IT MN990025
(43) Date of publication of application: 05.01.2000
(73) Proprietor: Land Holding S.A., 1219 Luxembourg (LU)
(72) Inventor: Martinelli, Adriano, 46020 Villa Saviola (IT)
(74) Representative: Weyland, J.J. Pierre

(56) References cited:
- AU-B- 595 007
- DE-B- 1 049 683
- DE-U- 8 709 395
- FR-A- 2 305 099
- GB-A- 2 150 003
- US-A- 3 818 955
- US-A- 3 871 949

## Description

The present invention relates to a device for treating foodstuffs, particularly round bales of hay.

It is known that forage products for feeding animals are currently stored for the most part in the form of round bales which require particular treatments if they are to be preserved for long periods.

Accordingly, there are systems in which the material to be treated, particularly round bales of hay but also other loose substances such as for example grain, is inserted in a hermetic container in which a high degree of vacuum is produced; as a consequence of the drop in pressure, the water contained in the material to be treated undergoes rapid low-temperature evaporation, consequently dehydrating said material.

It is also possible to interrupt vacuum generation by connecting the container to the atmosphere in order to introduce air, optionally heated, and then resume the cycle.

If the container is constituted by a plastic bag, as suggested, meant to contain the material until the time of use, the scarcity of the oxygen that remains contained in said bag at the end of air extraction, combined with said dehydration, produces optimum conditions for preserving said material, because it blocks the action of the agents responsible for fermentation, mainly clostridia and their spores, and prevents any other form of degradation and the formation of molds.

These systems have yielded excellent results, but continuous study has allowed to perfect improvements for which protection is now sought and which have the aim of optimizing operation and management costs.

The intended aim is achieved by a device for treating foodstuffs, particularly round bales of hay, according to claim 1.

Further characteristics and advantages will become apparent from the description of some embodiments of the invention, illustrated only by way of non-limitative example in the accompanying drawings, wherein:
Figure 1 is a view of the invention according to a first embodiment;
Figures 2 to 12 are views of the invention according to different embodiments.

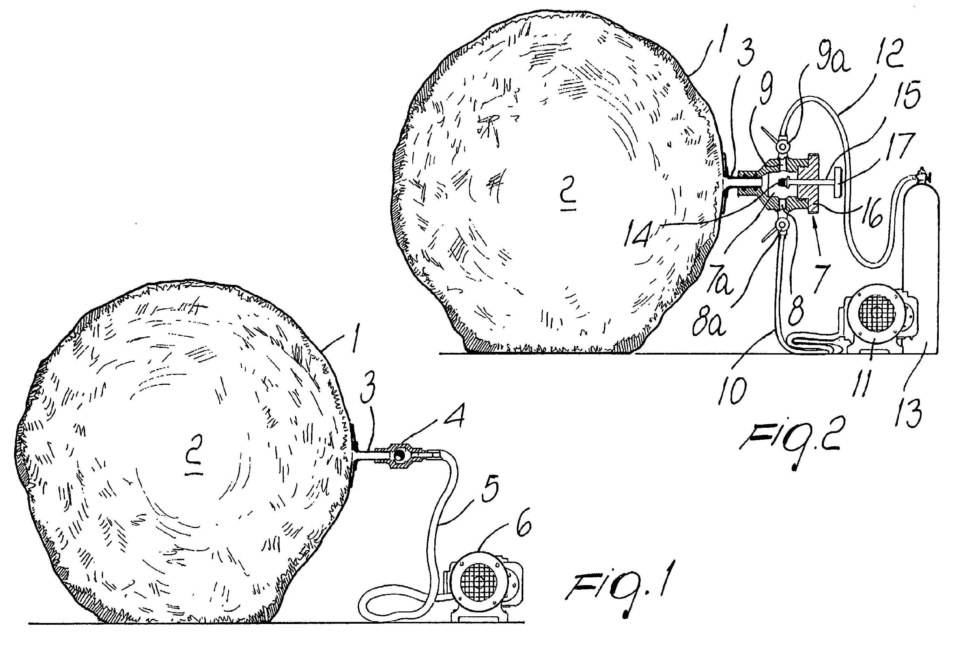

With reference to Figure 1, the reference numeral 1 designates a bag for containing a round bale 2; said bag is monolithically provided with an inlet 3 and made of packaging laminate, such as for example a sheet composed of two layers of polyethylene with an intermediate layer of nylon which are rigidly coupled along their entire extension.

A one-way valve 4 is associated with the inlet 3 and is connected to a hose 5 for connection to a vacuum pump 6.

Following the actuation of the pump 6, a negative-pressure atmosphere is produced inside the bag 1 and persists after the pump stops because of the presence of the valve 4; said atmosphere is very poor in oxygen, so as to inhibit any fermentation of the round bale contained in said bag.

The vapor that forms inside the bag due to the rapid vaporization of the water contained in the round bale caused by the pressure drop is partly removed by the pump 6 and partly remains, possibly condensed, inside the bag without compromising in any way the good conservation of the forage.

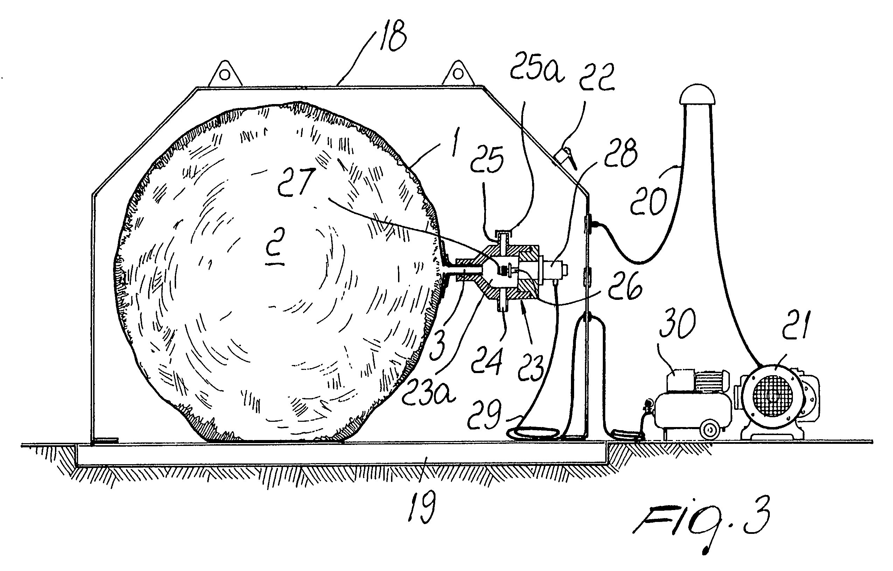

A fixture generally designated by the reference numeral 7 is detachably associated with the inlet 3 which is monolithically connected to the bag 1 shown in Figure 2 and comprises a portion of space 7a which is connected to the mouth of the inlet 3 and is provided with two connections to the outside designated by the reference numerals 8 and 9; the first connection has a manually-operated valve 8a which is connected to a hose 10 for connection to a vacuum pump 11 and the second connection is provided with a manually-actuated valve 9a which is connected to a hose 12 for conveying substances contained in a cylinder 13 which are adapted to produce, inside the bag 1, a controlled atmosphere or to enrich the product.

The fixture 7 is provided with means for applying a closure plug 14 to the mouth of the inlet 3; said means comprise a rod 15, which is associated with a movable cover 16, which is suitable to support said plug 14 at one end and to be pushed by manual actuation against a disk 17 until it moves from the position shown in the figure to the position for the insertion of the plug 14 in the mouth of the inlet 3.

After associating the fixture 7 with the inlet 3 by simple insertion, while the valve 9a is closed and the valve 8a is open, the vacuum pump 11 is actuated until the chosen negative pressure is reached inside the bag 1.

At this point the pump is stopped, the valve 8a is closed and the valve 9a is opened, introducing the substances contained in the cylinder 13 into the bag 1 in the required amount; then the closure plug 14 is applied to the mouth of the inlet 3 so as to ensure that the conditions thus reached persist inside the bag 1, so as to ensure the preservation of the round bale 2; the fixture 7 is disconnected from the inlet 3, and the round bale contained in the bag is ready to be stored.

Before describing further embodiments of the invention, it is noted that the fixture 7 can be provided according to numerous constructive embodiments, all of which are within the scope of the inventive concept.

Figure 3 illustrates a different embodiment of the invention, which provides for the presence of the rigid bell-shaped chamber 18 which is suitable to be detachably rested hermetically on the footing 19 so as to accommodate the bag 1, which contains a round bale and is rested on said footing during the treatment of said round bale; said bell-shaped chamber 18 is connected, by means of the hose 20, to the vacuum pump 21, and is provided with the valve 22 for restoring atmospheric pressure inside it at the end of the treatment.

The fixture 23 is detachably associated with the inlet 3 of the bag 1 and, as occurs for the above-described fixture 7, comprises the portion of space 23a which is connected to the mouth of the inlet 3 and is provided with the two connections 24 and 25 to the outside: the first connection is open onto the portion of space delimited by the bell-shaped chamber and the second connection is closed by means of the plug 25a.

The rod 26 meant to operate the plug 27 for closing the mouth of the inlet 3 is actuated by the actuation cylinder 28, which is connected by means of the hose 29 to the pneumatic control unit 30.

By actuating the pump 21, a pressure drop is produced in the bell-shaped chamber 28 and in the bag 1, and at all times said bag is in equilibrium between the inside and the outside: the situation is therefore particularly favorable, because the bag does not adhere to the round bale contained therein, and therefore any compaction of said round bale, which would obviously detract from the satisfactory outcome of the treatment, is avoided.

Once the chosen degree of vacuum has been reached, the pump 21 is stopped, the plug 27 is applied to the mouth of the inlet 3, and the presence of the required conditions for the good preservation of the round bale is accordingly ensured inside the bag 1; after lifting the bell-shaped chamber 18, after restoring atmospheric pressure inside it and after disconnecting the fixture 23 from the inlet 3, the round bale, packaged in its own bag, can be stored.

In a variation of the embodiment just described, it is possible to associate with the inlet 3 of the bag 1 a one-way valve which is open onto the portion of space delimited by the bell-shaped chamber 18.

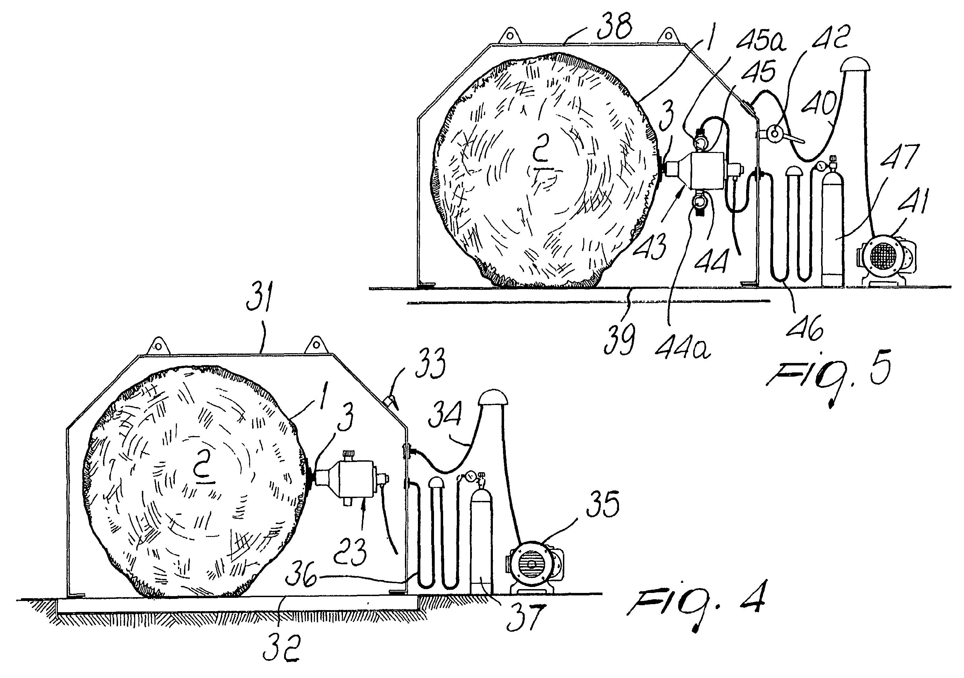

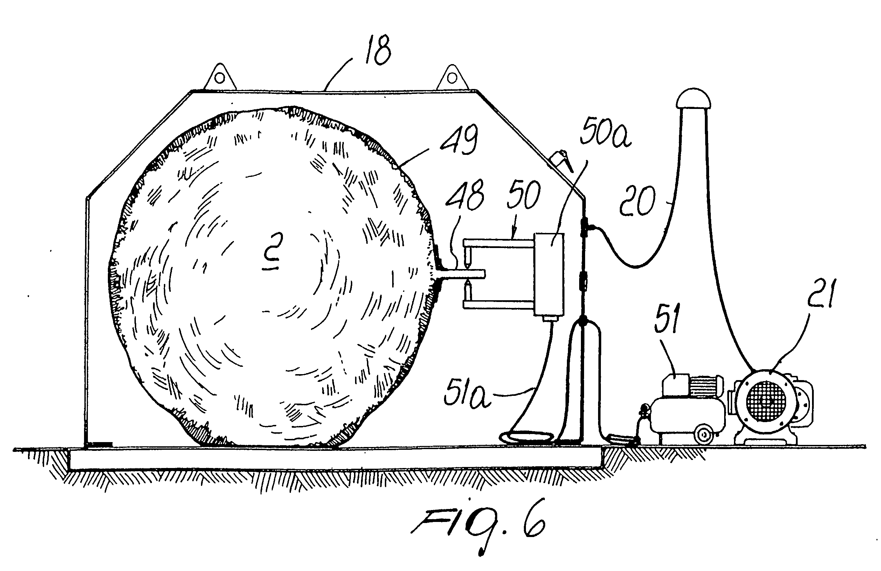

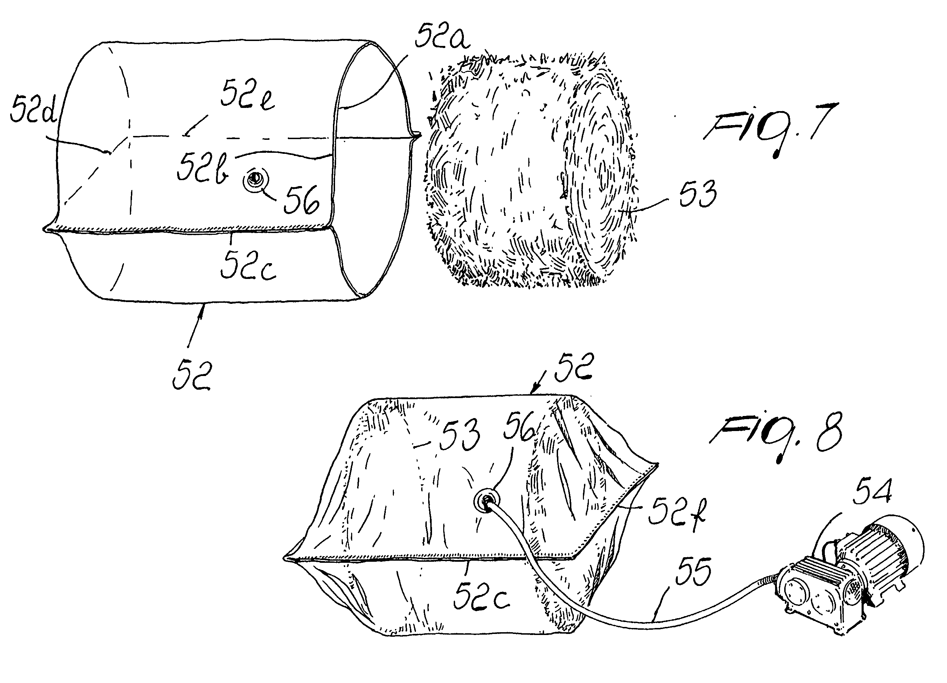

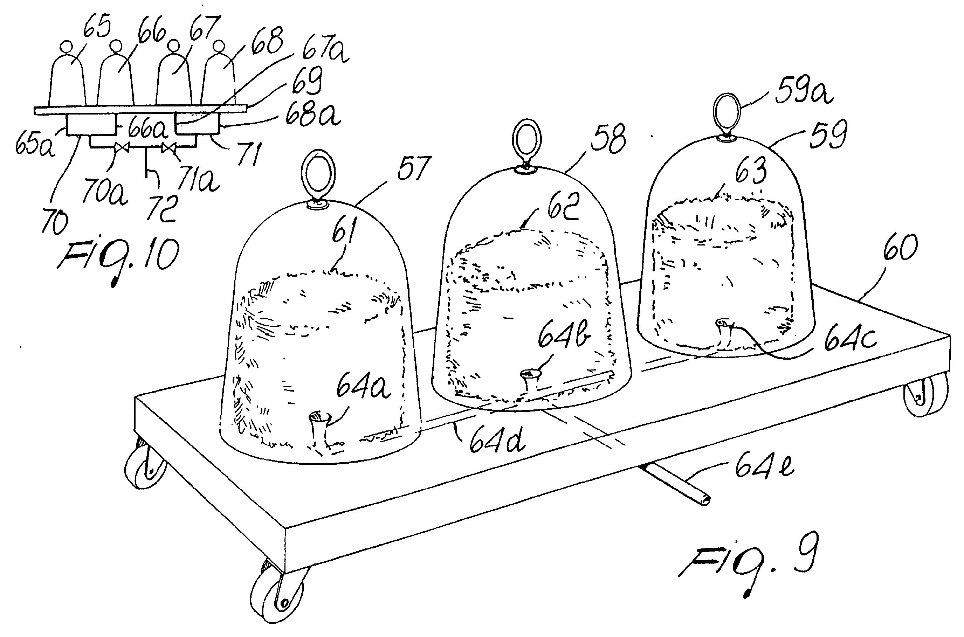

The embodiment shown in Figure 4 provides for the bell-shaped chamber 31, which detachably and hermetically rests on the footing 32 so as to accommodate the bag 1 that contains a round bale to be treated; the fixture 23 is associated with the inlet 3 of the bag and is identical to the fixture described with reference to Figure 3: said bell-shaped chamber is provided with the valve 33 for restoring atmospheric pressure at the end of the treatment, and is connected to the vacuum pump 35 by means of the hose 34 and, by means of the hose 36, to the cylinder 37, which contains substances adapted to provide a controlled atmosphere and an enrichment of the product.

Operation is evident: while the cylinder 37 is closed, the vacuum pump 35 is actuated until the chosen vacuum is reached inside the bell-shaped chamber 31 and the bag 1; said pump is then stopped and the cylinder 37 is opened, making the substances contained therein flow toward the bell-shaped chamber and the bag in the necessary amount.

After plugging the inlet 3, operations as described above are performed in order to make the packaged round bale available for removal.

Also in this case, the bag 1 is always in equilibrium between the inside and the outside and therefore never tends to adhere to the round bale contained therein and compact it, and can be provided with a low thickness.

Figure 5 illustrates another embodiment of the invention, which comprises the bell-shaped chamber 38 for containing, after being rested hermetically on the footing 39, a round bale contained in the bag 1, which is connected by means of the hose 40 to the vacuum pump 41, and provided with the controlled valve 42 for restoring atmospheric pressure in the manner described hereafter.

The fixture 43 is detachably associated with the inlet 3 of the bag 1 and differs from the fixture 23 described earlier only in that on the connection 44, which corresponds to the connection 24 of the fixture 23, there is provided the electric valve 44a for connection to the portion of space delimited by the bell-shaped chamber 38, whereas on the connection 45, which corresponds to the connection 25 of the fixture 23, there is provided the electric valve 45a for connection, by means of the hose 46, to the cylinder 47 which contains substances adapted to produce a controlled atmosphere and an enrichment of the product.

While the valve 44a is opened and the valve 45a is closed, the vacuum pump 41 is activated until the chosen vacuum is reached, with the bag 1 in favorable equilibrium conditions.

After the pump 41 has been stopped, the valve 44a is closed, the valve 45a is opened and the substances contained in the bottle 47 are introduced in the bag 1.

In order to maintain the bag 1 always in equilibrium between the inside and the outside, the valve 42 is gradually opened, introducing air in the bell-shaped chamber 38 so as to cause a pressure increase therein with a gradient similar to the gradient of the pressure increase inside said bag 1 produced by the introduction of the substances from the cylinder 47.

When the chosen conditions are reached, the inlet 3 is plugged and one proceeds as described above in order to make the packaged and treated round bale available for storage.

In a further embodiment of the invention, shown in Figure 6, the inlet 48 of a bag 49 accommodated in a bell-shaped chamber 18 identical to the bell-shaped chamber of Figure 3 and, like said bell-shaped chamber, connected by means of the hose 20 to the vacuum pump 21, is suitable to be heat-sealed at the end of the operation of said pump 21 by means of the adapted fixture, generally designated by the reference numeral 50, which is provided with an actuator 50a which is connected to the pneumatic control unit 51 by means of the hose 51a.

It is understood that said inlet 48 can be constituted by a simple extension of the material of the bag 49 or can be monolithically applied to said bag, and it is also specified that the bell-shaped chamber 18 can also be connected to a tank of substances adapted to produce, inside the bag, a controlled atmosphere and an enrichment of the product.

Figures 7 and 8 illustrate a different embodiment of the invention, in which the bag 52 is made of packaging laminate, constituted by the internal layer 52a of polyethylene and by the external layer 52b made of nylon which are thermally bonded at the edges 52c, 52d and 52e, so as to leave one side open for the insertion of the round bale 53 as shown in Figure 7.

After inserting the round bale, the bag 52 is closed by heat sealing at the edge 52f, and is connected to the vacuum pump 54 by means of the hose 55, which engages the one-way membrane valve 56 which is monolithically associated with the bag 52.

A different embodiment of the invention is described with reference to Figure 9, in which the reference numerals 57, 58, 59 designate the bell-shaped chambers meant to rest on the footing 60 in order to hermetically contain the round bales of hay 61, 62 and 63, provided with rings such as 59a for the bell-shaped chamber 59 which allow said bell-shaped chambers to be handled by lifting means in order to change the round bale to be processed.

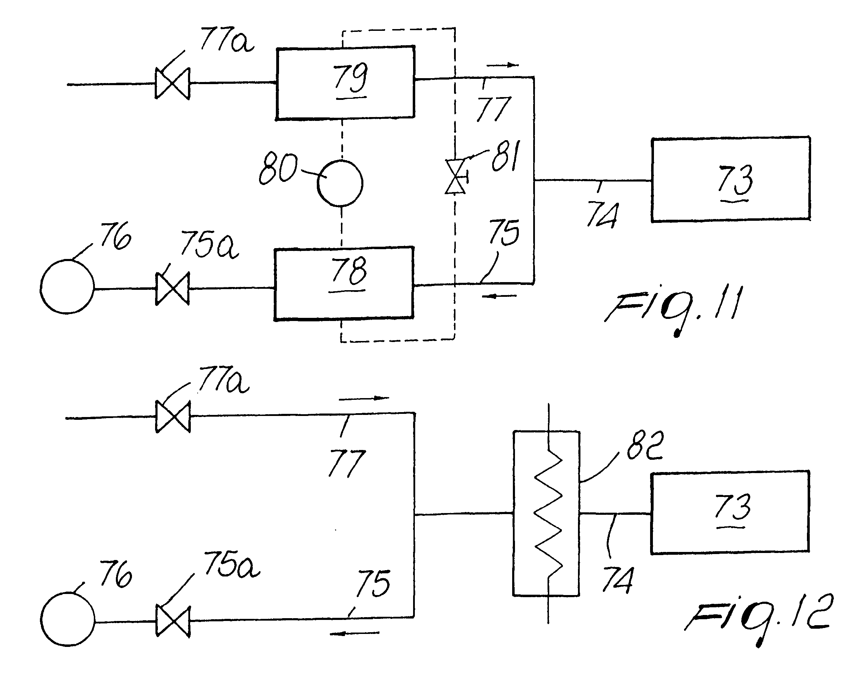

At the regions meant for the resting of the round bales, the ducts 64a, 64b, 64c that branch off from the manifold 64d lead onto the surface of the footing 60; said manifold is connected, by means of the duct 64e, to additional means for connection to at least a vacuum pump; embodiments of said means are described for example with reference to Figures 11 and 12.

By operating the vacuum pump, a considerable vacuum is produced inside the bell-shaped chambers and the water contained in the hay evaporates at low temperature, consequently dehumidifying the product.

Each one of the bell-shaped chambers can also be internally provided with a fan and with a heating device of any kind, for example of the microwave type.

In the embodiment of Figure 10, the bells-shaped chamber 65, 66, 67 and 68 that rest on the footing 69 are divided into two groups: the ducts 65a, 66a that end in the resting regions of the bell-shaped chambers 65 and 66 are in fact connected to the manifold 70, while the ducts 67a and 68a related to the bell-shaped chambers 67 and 68 are connected to the manifold 71, and said manifolds 70 and 71 are connected to the line 72, which is connected at least to the vacuum pump with the valves 70a, 71a interposed, said valve allowing to split the operation of the units.

Figure 11 is a diagram of the means for selectively connecting one or more containers of the material to be processed to a vacuum pump and to the atmosphere.

In said figure, the reference numeral 73 designates an assembly formed by one or more round bale containers, such as for example the bell-shaped chambers 57, 58 and 59 of the system of Figure 9, from which the duct 74 branches out, which is connected to said containers, such as the duct 64e of said system of Figure 9, which has two branches.

The branch 75, provided with a gate valve 75a, reaches the vacuum pump 76, while the branch 77, provided with a similar valve 77a, is open at its end onto the atmosphere, and the evaporator 78 and the condenser 79 of a refrigeration system are interposed respectively on said branches; the compressor 80 and the throttling valve 81 of said refrigeration system are shown in the diagram.

During the operating steps in which the vacuum pump 76 is active, while the valve 77a is closed, the air filled with water vapor that flows in the branch 75 as shown by the arrow in the figure passes through the evaporator 78 of the refrigeration system and is cooled, producing two important effects, namely the condensation of the water vapor and the reduction of the air volume, both of which are advantageous with respect to the operation of said pump.

The steps of the activity of the pump 76 can be alternated with steps for connecting the containers of the assembly 73 to the atmosphere: for this purpose, the valve 75a is closed and the valve 77a is opened, and the air that flows through the branch 77, drawn back in the direction of the arrow of the figure by the vacuum formed beforehand in the containers, is advantageously heated by passing through the condenser 79 of the refrigeration system.

In the diagram of Figure 12, the reference numeral 73 again designates the assembly of containers provided with the duct 74, which has the branches 75 connected to the vacuum pump 76 and the branch 77 which is open onto the atmosphere at its end, with the respective valves 75a, 77a.

The heat exchanger 82 is interposed on the duct 74 and is selectively supplied with a cold fluid during the operation of the pump 76, so as to cool the air filled with water vapor that reaches said pump, and with a hot fluid when air from the atmosphere enters the containers through the branch 77.

It goes almost without saying that the containers of the material to be processed that are included in the assembly 73 of the diagrams of Figures 11 and 12 may be of any type: said containers of any type may further contain a cold battery which is adapted to condense the vapor released by the material to be processed and said battery is provided with condensate collection means.

It should also be noted that said containers, regardless of the manner in which they are provided, can be connected to a pipe for conveying substances which are adapted to produce, inside said pipes, a controlled atmosphere and an enrichment of the product.

The described invention is susceptible of numerous other modifications and variations, all of which are within the scope of the inventive concept as limited by the claims: thus, for example, it is possible to provide an electric resistor on the line connecting the containers to the atmosphere, and the means for cooling the fluid aspirated by the vacuum pump and heating the incoming atmospheric air may comprise a battery of Peltier cells.

It is also possible to provide a recirculation line which comprises a fan and is adapted to convey air from the inside of the at least one container in order to send it, appropriately dehumidified, upstream of the heating means provided on the input line in said container, except for the opening of said line toward the atmosphere.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for treating foodstuffs, particularly round bales (2) of hay, comprising at least one hermetic container of the material to be treated which is connected at least to a vacuum pump (11, 21, 35, 41), wherein the container is constituted by a bag (1) made of packaging laminate and monolithically provided with an inlet (3) for connection to the outside, which inlet (3) is adapted to receive associated means for connection at least to the vacuum pump (11, 21, 35, 41), which comprise a fixture (7, 23, 43) which is adapted to be detachably associated with the inlet (3) and which comprises a portion of space (7a, 23a) that is connected to the mouth of the inlet (3), **characterized in that** the fixture (7, 23, 43) is provided with two connections (8, 9, 24, 25, 44, 45) for connection to the outside and comprises means adapted to apply a closure plug (14, 27) to the mouth of the inlet (3).

2. The device according to claim 1, **characterized in that** two connections (8, 9) to the outside are connected, with respective valves (8a, 9a) interposed, respectively to a hose (10) for connection to the vacuum pump (11) and to a hose (12) for conveying substances adapted to produce, inside the bag (1), a controlled atmosphere and an enrichment of the product.

3. The device according to claim 1 or claim 2, **characterized in that** the valves (8a, 9a) and the means suitable for applying a plug (14) to the mouth of the inlet (3) that lie within the fixture (7) associated with the inlet (3) of the bag (1) meant to be subjected to atmospheric pressure during treatment are manually operated.

4. Combination of a device according to any of the preceding claims and a rigid bell-shaped chamber (18, 31, 38), **characterized in that** the bell-shaped chamber (18, 31, 38) is adapted to be detachably and hermetically rested on a suitable footing (19, 32, 39) so as to contain at least one bag (1) resting on said footing (19, 32, 39) during the treatment of the material contained therein, and it is connected at least to the vacuum pump (21, 35, 41) and, is provided with means (22, 33, 42) for restoring atmospheric pressure at the end of the treatment.

5. The device according to claim 4, **characterized in that** in the fixture (23, 43) associated with the inlet (3) of the bag (1) meant to be contained within the bell-shaped chamber (18, 31, 38) connected to the vacuum pump (21, 35, 41), one of the connections (24, 25, 44, 45) is plugged and the other one is open onto the portion of space delimited by the bell-shaped chamber (18, 31, 38).

6. The device according to claim 4 or claim 5, **characterized in that** the bell-shaped chamber (31) is selectively connected to the vacuum pump (35) and to a hose (36) for conveying substances adapted to produce, inside said bell-shaped chamber (31), a controlled atmosphere and an enrichment of the product, the fixture (23) associated with the inlet (3) of the bag (1) meant to be contained within the bell-shaped chamber (31) having one plugged connection and the other connection open onto the portion of space delimited by the bell-shaped chamber (31).

7. The device according to any one of claims 4 to 6, **characterized in that** the bell-shaped chamber (38) is connected to the vacuum pump (41) and **in that** in the fixture (43) associated with the inlet (3) of the bag (1) meant to be contained within the bell-shaped chamber (38), one connection (44) is controlled by a valve (44a) and is connected to the portion of space delimited by the bell-shaped chamber (38) and the other connection (45) is controlled by a valve (45a) and connected to a hose (46) for conveying substances adapted to produce, inside the bag (1), a controlled atmosphere and an enrichment of the product.

8. The device according to any one of claims 4 to 7, **characterized in that** the bell-shaped chamber (38) is provided with means which are adapted to produce, at the end of the operation of the vacuum pump (41), an increase in the pressure inside it until atmospheric pressure is restored with a gradient which is equal to the gradient of the pressure increase inside the bag (1) contained within the bell-shaped chamber (38) by introducing therein substances which are adapted to produce a controlled atmosphere and an enrichment of the product.

9. The device according to any one of claims 4 to 8, **characterized in that** the fixture (23) associated with the inlet (3) of the bag (1) meant to be contained in the bell-shaped chamber (18) comprises means suitable for applying a plug (27) to the mouth of the inlet (3), said means being actuated by an actuator (28).

10. The device according to any one of claims 4 to 9, **characterized in that** the inlet (3) for connection to the outside of the bag (1) meant to be contained within the bell-shaped chamber (18) connected at least to the vacuum pump (21) is adapted to be heat-sealed by a suitable fixture (50) accommodated in the bell-shaped chamber (18).

11. A process for treating foodstuffs, in particular round bales (2) of hay, in a device comprising a device as defined in any one of the preceding claims, **characterized in that** any fermentation of the foodstuffs contained in the container is inhibited.

## Patentansprüche

1. Vorrichtung zum Behandeln von Futtermitteln, insbesondere Rundballen (2) aus Heu, die mindestens einen hermetischen Behälter aus dem zu behandelnden Material umfasst, das mindestens an eine Vakuumpumpe (11, 21, 35, 41) angeschlossen ist, wobei der Behälter durch einen Beutel (1) konstituiert ist, der aus Verpackungslaminat hergestellt und monolithisch mit einem Einlass (3) zum Anschluss an die Außenseite bereitgestellt ist, wobei der Einlass (3) angepasst ist, assoziierte Mittel zum Anschluss an mindestens die Vakuumpumpe (11, 21, 35, 41) aufzunehmen, die eine Halterung (7, 23, 43) umfassen, die angepasst ist, entfernbar mit dem Einlass (3) verbunden zu sein und die einen Raumteil (7a, 23a) umfasst, der an die Öffnung des Einlasses (3) angeschlossen ist, **dadurch gekennzeichnet, dass** die Halterung (7, 23, 43) mit zwei Anschlüssen (8, 9, 24, 25, 44, 45) zum Anschluss an die Außenseite versehen ist und Mittel umfasst, die angepasst sind einen Verschlussstopfen (14, 27) an die Öffnung des Einlasses (3) anzubringen.

2. Vorrichtung nach Anspruch 1, **dadurch gekennzeichnet, dass** zwei Anschlüsse (8, 9) zur Außenseite, mit jeweiligen dazwischen angeordneten Ventilen (8a, 9a), an einen Schlauch (10) zum Anschluss an die Vakuumpumpe (11) bzw. an einen Schlauch (12) zum Fördern von Substanzen angeschlossen sind, die angepasst sind, im Inneren des Beutels (1) eine kontrollierte Atmosphäre und eine Anreicherung des Produkts zu produzieren.

3. Vorrichtung nach Anspruch 1 oder Anspruch 2, **dadurch gekennzeichnet, dass** die Ventile (8a, 9a) und die Mittel, die zum Anbringen eines Verschlussstopfens (14) an die Öffnung des Einlasses (3) geeignet sind, die innerhalb der Fixiervorrichtung (7) liegen, die mit dem Einlass (3) des Beutels (1) assoziiert ist, der während der Behandlung atmosphärischem Druck unterliegen soll, manuell zu betätigen sind.

4. Kombination einer Vorrichtung nach einem beliebigen der vorhergehenden Ansprüche und einer starren glockenförmigen Kammer (18, 31, 38), **dadurch gekennzeichnet, dass** die glockenförmige Kammer (18, 31, 38) angepasst ist, abnehmbar und hermetisch auf einer geeigneten Fußplatte (19, 32, 39) zu ruhen, um mindestens einen Beutel (1) zu enthalten, der auf besagter Fußplatte (19, 32, 39) während der Behandlung des darin enthaltenen Materials ruht, und er ist an mindestens die Vakuumpumpe (21, 35, 41) angeschlossen und ist mit Mitteln (22, 33, 42) zum Wiederherstellen atmosphärischen Drucks am Ende der Behandlung versehen.

5. Vorrichtung nach Anspruch 4, **dadurch gekennzeichnet, dass** die Fixiervorrichtung (23, 43), die mit dem Einlass (3) des Beutels (1) assoziiert ist, innerhalb der glockenförmigen Kammer (18, 31, 38) untergebracht werden soll, die an die Vakuumpumpe (21, 35, 41) angeschlossen ist, wobei einer der Anschlüsse (24, 25, 44, 45) mit einem Stopfen verschlossen ist und der andere zum Raumteil hin offen ist, der durch die glockenförmige Kammer (18, 31, 38) begrenzt wird.

6. Vorrichtung nach Anspruch 4 oder Anspruch 5, **dadurch gekennzeichnet, dass** die glockenförmige Kammer (31) selektiv an die Vakuumpumpe (35) und an einen Schlauch (36) zum Fördern von Substanzen angeschlossen wird, der angepasst ist, innerhalb besagter glockenförmigen Kammer (31), eine kontrollierte Atmosphäre und eine Anreicherung des Produkts zu produzieren, die mit dem Einlass (3) des Beutels (1) assoziierte Fixiervorrichtung (23), die innerhalb der glockenförmigen Kammer (31) untergebracht werden soll, weist einen mit einem Stopfen verschlossenen Anschluss auf und der andere Anschluss ist zum Raumteil hin offen, das durch die glockenförmige Kammer (31) begrenzt wird.

7. Vorrichtung nach einem beliebigen der Ansprüche 4 bis 6, **dadurch gekennzeichnet, dass** die glockenförmige Kammer (38) an die Vakuumpumpe (41) angeschlossen ist und **dadurch**, dass die Fixiervorrichtung (43), die mit dem Einlass (3) des Beutels (1) assoziiert ist, innerhalb der glockenförmigen Kammer (38) untergebracht werden soll, ein Anschluss (44) durch ein Ventil (44a) kontrolliert wird und an den Raumteil angeschlossen ist, der durch die glockenförmige Kammer (38) begrenzt ist und der andere Anschluss (45) durch ein Ventil (45a) kontrolliert wird und an einen Schlauch (46) zum Fördern von Substanzen angeschlossen ist, der angepasst ist, innerhalb des Beutels (1), eine kontrollierte Atmosphäre und eine Anreicherung des Produkts zu produzieren.

8. Vorrichtung nach einem beliebigen der Ansprüche 4 bis 7, **dadurch gekennzeichnet, dass** die glockenförmige Kammer (38) mit Mitteln versehen ist, die angepasst sind, bei Betriebsende der Vakuumpumpe (41), eine Erhöhung des Drucks im Inneren der Kammer zu produzieren, bis atmosphärischer Druck mit einem Gradienten wiederhergestellt ist, der gleich dem Gradienten des Druckanstiegs im Beutel (1) ist, der innerhalb der glockenförmigen Kammer (38) untergebracht ist, indem Substanzen dort eingeführt werden, die angepasst sind, eine kontrollierte Atmosphäre und eine Anreicherung des Produkts zu produzieren.

9. Vorrichtung nach einem beliebigen der Ansprüche 4 bis 8, **dadurch gekennzeichnet, dass** die Fixiervorrichtung (23), die mit dem Einlass (3) des Beutels (1) assoziiert ist, die in der glockenförmigen Kammer (18) untergebracht werden soll, Mittel umfasst, die geeignet sind einen Verschlussstopfen (27) an die Öffnung des Einlasses (3) anzubringen, wobei besagte Mittel von einem Betätiger (28) betätigt werden.

10. Vorrichtung nach einem beliebigen der Ansprüche 4 bis 9, **dadurch gekennzeichnet, dass** der Einlass (3) zum Anschluss an die Außenseite des Beutels (1), der in der glockenförmigen Kammer (18) untergebracht werden soll, die mindestens an die Vakuumpumpe (21) angeschlossen ist, angepasst ist durch eine geeignete Fixiervorrichtung (50) verschweißt zu werden, die in der glockenförmigen Kammer (18) untergebracht ist.

11. Prozess zur Behandlung von Futtermitteln, insbesondere Rundballen (2) aus Heu in einer Vorrichtung, die eine Vorrichtung umfasst wie sie in einem beliebigen der vorhergehenden Ansprüche definiert ist, **dadurch gekennzeichnet, dass** jegliche Fermentierung der im Behälter enthaltenen Futtermittel inhibiert wird.

## Revendications

1. Dispositif de traitement de denrées alimentaires, en particulier de balles rondes (2) de foin, comprenant au moins un récipient hermétique du matériau devant être traité, connecté au moins à une pompe à vide (11, 21, 35, 41), le récipient étant constitué par un sac (1) composé d'un stratifié d'emballage et pourvu de manière monolithique d'une entrée (3) destinée à être connectée à l'extérieur, l'entrée (3) étant destinée à recevoir des moyens associés en vue d'une connexion à au moins la pompe à vide (11, 21, 35, 41), comprenant un moyen de fixation (7, 23, 43) adapté pour être associé de manière amovible à l'entrée (3) et comprenant une partie d'espace (7a, 23a) connectée à l'embouchure de l'entrée (3), **caractérisé en ce que** le moyen de fixation (7, 23, 43) comporte deux connexions (8, 9, 24, 25, 44, 45) en vue d'une connexion avec l'extérieur, et comprend des moyens destinés à appliquer un bouchon de fermeture (14, 27) sur l'embouchure de l'entrée (3).

2. Dispositif selon la revendication 1, **caractérisé en ce que** deux connexions (8,9) avec l'extérieur sont connectées respectivement, des soupapes respectives (8a, 9a) étant intercalées, à un tuyau (10) pour la connexion à la pompe à vide (11) et un tuyau (12) pour transférer des substances adaptées pour établir, à l'intérieur du sac (1), une atmosphère contrôlée et un enrichissement du produit.

3. Dispositif selon les revendications 1 ou 2, **caractérisé en ce que** les soupapes (8a, 9a) et les moyens convenables pour appliquer un bouchon (14) sur l'embouchure de l'entrée (3), agencés à l'intérieur du moyen de fixation (7) associé à l'entrée (3) du sac (1), destinés à être exposés à la pression atmosphérique au cours du traitement, sont actionnés manuellement.

4. Combinaison d'un dispositif selon l'une quelconque des revendications précédentes et d'une chambre rigide en forme de cloche (18, 31, 38), **caractérisée en ce que** la chambre en forme de cloche (18, 31, 38) est adaptée pour reposer de manière amovible et hermétique sur un socle approprié (19, 32, 39), de sorte à contenir au moins un sac (1) reposant sur ledit socle (19, 32, 39) au cours du traitement du matériau qui y est contenu, et est connectée au moins à la pompe à vide (21, 35, 41) et comporte des moyens (22, 33, 42) pour restaurer la pression atmosphérique à la fin du traitement.

5. Dispositif selon la revendication 4, **caractérisée en ce que** dans le moyen de fixation (23, 43) associé à l'entrée (3) du sac (1) destiné à être contenu dans la chambre en forme de cloche (18, 31, 38) connectée à la pompe à vide (21, 35, 41), une des connexions (24, 25, 44, 45) est bouchée, l'autre étant ouverte vers la partie de l'espace délimitée par la chambre en forme de cloche (18, 31, 38).

6. Dispositif selon les revendications 4 ou 5, **caractérisé en ce que** la chambre en forme de cloche (31) est sélectivement connectée à la pompe à vide (35) et à un tuyau (36) pour transférer des substances adaptées pour établir, à l'intérieur de ladite chambre en forme de cloche (31), une atmosphère contrôlée et un enrichissement du produit, le moyen de fixation (23) associé à l'entrée (3) du sac (1) destiné à être contenu dans la chambre en forme de cloche (31) comportant une connexion bouchée, l'autre connexion étant ouverte vers la partie de l'espace délimitée par la chambre en forme de cloche (31).

7. Dispositif selon l'une quelconque des revendications 4 à 6, **caractérisé en ce que** la chambre en forme de cloche (38) est connectée à la pompe à vide (41), et **en ce que** dans le moyen de fixation (43) associé à l'entrée (3) du sac (1) destiné à être contenu dans la chambre en forme de cloche (38), une connexion (44) est contrôlée par une soupape (44a) et connectée à la partie de l'espace délimitée par la chambre en forme de cloche (38), l'autre connexion (45) étant contrôlée par une soupape (45a) et connectée à un tuyau (46) pour transférer des substances adaptées pour établir, à l'intérieur du sac (1) une atmosphère contrôlée et un enrichissement du produit.

8. Dispositif selon l'une quelconque des revendications 4 à 7, **caractérisé en ce que** la chambre en forme de cloche (38) comporte des moyens adaptés pour entraîner, à la fin du fonctionnement de la pompe à vide (41), un accroissement de la pression interne, jusqu'à la restauration de la pression atmosphérique, avec un gradient égal au gradient de l'accroissement de la pression à l'intérieur du sac (1) contenu dans la chambre en forme de cloche (38), en y introduisant des substances adaptées pour établir une atmosphère contrôlée et un enrichissement du produit.

9. Dispositif selon l'une quelconque des revendications 4 à 8, **caractérisé en ce que** le moyen de fixation (23) associé à l'entrée (3) du sac (1), destiné à être contenu dans la chambre en forme de cloche (18) comprend des moyens destinés à appliquer un bouchon (27) sur l'embouchure de l'entrée (3), lesdits moyens étant actionnés par un dispositif d'actionnement (28).

10. Dispositif selon l'une quelconque des revendications 4 à 9, **caractérisé en ce que** l'entrée (3) devant être connectée à l'extérieur du sac (1) destiné à être contenu dans la chambre en forme de cloche (18) connectée au moins à la pompe à vide (21) est adaptée pour à être soudée à chaud par un moyen de fixation approprié (50) agencé dans la chambre en forme de cloche (18).

11. Procédé de traitement de denrées alimentaires, en particulier de bottes rondes (2) de foin, dans un dispositif comprenant un dispositif selon l'une quelconque des revendications précédentes, **caractérisé en ce qu'**une quelconque fermentation des denrées alimentaires contenues dans le récipient est empêchée.
